**Europäisches Patentamt**

**European Patent Office**

**Office européen des brevets**

(11) Publication number: **0 087 995**
**B1**

# EUROPEAN PATENT SPECIFICATION

(45) Date of publication of patent specification: **23.08.89**

(21) Application number: **83400311.3**

(22) Date of filing: **14.02.83**

(51) Int. Cl.⁴: **G 01 N 27/26,** B 01 D 57/02,
C 08 F 251/00, C 08 L 5/02,
C 08 L 5/12

(54) Copolymer of acrylamide and polysaccharide resin as electrophoretic gel medium.

(30) Priority: **19.02.82 US 350446**

(43) Date of publication of application:
**07.09.83 Bulletin 83/36**

(45) Publication of the grant of the patent:
**23.08.89 Bulletin 89/34**

(84) Designated Contracting States:
**DE-FR GB IT SE**

(56) References cited:
**EP-A-0 050 389**
**DE-A-2 600 891**
**DE-A-2 826 895**
**FR-A-2 334 691**

(73) Proprietor: **FMC Corporation**
**2000 Market Street**
**Philadelphia Pennsylvania 19103 (US)**

(72) Inventor: **Nochumson, Samuel**
**70 Beech Street**
**Rockland Maine 04841 (US)**

(74) Representative: **Mongrédien, André et al**
**c/o SOCIETE DE PROTECTION DES INVENTIONS**
**25, rue de Ponthieu**
**F-75008 Paris (FR)**

# Description

This invention relates to electrophoresis and in particular to an improved polyacrylamide gel electrophoretic carrier medium.

Electrophoresis is the term generally applied to the migration of charged particles through an electrolytic carrier medium under the influence of an electric field. Because of their distinct electrical properties various classes of charged particles move at different rates through the carrier medium. Those particles having the same electrical properties migrate together in specific, identifiable zones. Electrophoresis has proved an invaluable tool for the resolution and isolation of complex biological substances such as enzymes, serums, carbohydrates and proteins including albumin and globulins and the like.

Numerous types of carrier media, including free solutions, buffer-saturated paper strips and gels such as agarose and agar have been used in carrying out electrophoresis.

From US—A—4 094 832 there is known an electrophoretic gel composition comprising a copolymer of acrylamide and allylglycidyl dextran. The use of an electrophoretic gel composition on a support sheet having an activated surface to promote adhesion is knwon from DE—A—2 826 895.

A few years ago polyacrylamide gel capable of resolving many more fractions than conventional electrophoresis media, was introduced and immediately found wide acceptance. In one typical commercial application, the gel is formed in place by the in situ polymerization of a mixture of acrylamide and N,N'-methylenebisacrylamide. The resulting gel is stable, strong, transparent, completely insoluble in water, inert to most chemicals and non-ionic. A further advantage of polyacrylamide gels is that once formed and the electrophoretic pattern developed, they can be stored indefinitely in either hydrated or dehydrated state. By adjusting the relative proportions of the two monomers, pore size can be controlled in the gel and hence its sieving action.

The properties of the polyacrylamide gel can be modified or varied to some extent by changing the composition of the acrylamide polymerizable composition. For instance, N,N'-methylenebisacrylamide can be replaced by other cross-linkers as exemplified by ethylene diacrylate, N,N'-(1,2-dihydroxyethylene)-bis-acrylamide, N,N'-diallyltartardimide, N,N',N''-triallylcitric triamide, poly-(ethylene glycol) diacrylate 200, N,N'-bisacrylylcystamine, and poly(ethylene glycol) diacrylate 400. Other approaches include the use of substituted acrylamides. Thus in U.S. Patent 4,189,370 to Boschetti there are described gel polymers prepared by the radical polymerization of N-methylolacrylamide with a bifunctional allylic or acrylic monomer. The gels were developed as a means of effecting the stepped gradient separation of seric lipoproteins. Anionic polysaccharides containing COOH groups may be added to promote migration of the lipoproteins. In a still further approach, the polyacrylamiade is employed in admixture with other gels such as agarose or agar-agar. These mixed gels are disclosed in U.S. Patent 3 578 604 to Uriel.

Although a decided advance in the electrophoresis art, polyacrylamide gels are not entirely problem-free. A particularly vexatious trait, for example, is their propensity to pull away from the support base while undergoing dehydration. In fact, the gel by itself shrivels uncontrollably unless special drying precautions are followed. These include careful drying of the gels in a commercial vacuum dryer which ensures constant and controlled heat. Even under these conditions cracking and shrinkage of the dried films may occur. Some improvement in drying characteristics is afforded by the polyacrylamide/agarose mixtures of Uriel aforesaid provided polyacrylamide gel composition is limited to no more than about 12%; if this gel level is exceeded, shrinking and cracking is again encountered. Even more difficult to dehydrate are the highly concentrated polyacrylamide gels—up to 50% or more—having restricted pore size for use in separating lower molecular weight substances.

Therefore, it is an advantage of the invention as claimed in claim 1 to provide an electrophoretic gel composition which, in the form of electrophoretic gel films bearing electrophoretic patterns, has improved drying characteristics. Other advantages and purposes will become manifest in the ensuing description.

By ethylenically unsaturated groups is meant those hydrocarbon radicals containing isolated carbon-carbon double bonds which undergo addition polymerization or copolymerization in the presence of a catalyst.

The ethylenically unsaturated polysaccharide resins used in practicing the invention are obtained following known synthetic procedures such as the preparation of modified agarose and agar described in U.S. Patent 3,956,273 to Guiseley. According to this patent, the OH groups in the hydrophilic resins agarose and agar are reacted with acyl and alklyating reagents including ethylenically unsaturated members to provide a variety of resin derivatives. In carrying out these reactions the resin is first dissolved in strong aqueous alkali, about 0.5 to 1.5 molar in alkali metal hydroxide, after which the ethylenically unsaturated etherification or acylating reagent is added. Examples of etherification agents include alkenyl halides, for example, 3-bromopropene, 3-bromo-2-butene, 4-bromo-2-hexene, 6-bromo-3-heptene, etc; also allylglycidyl ether; acylating agents include acrylol chloride, crotonyl chloride, methacryloyl chloride, 3-butenoyl. Since some discoloration or darkening of the solution tends to occur during the reaction when it is carried out in aqueous alkaline solution, producing a product which is discolored although otherwise entirely satisfactory, it is also preferred to block the aldehyde end group of the agarose, for example by reduction, before bringing the agar or agarose into contact with aqueous alkali, thus preventing the color-forming reaction which involved the aldehyde group from taking place. The blocking agent of choice is a borohydride, particularly an alkali metal borohydride such as sodium borohydride, which reduces the aldehyde end group to an alcohol (hydroxy) group.

The reaction is preferably carried out at an elevated temperature from about 70°C to 100°C or more, but lower temperatures may be used to minimize discoloration if the aldehyde end group is not blocked or to reduce loss when a relatively volatile reagent is used. At lower temperatures the reaction is slower and in some cases the selected reagent is decomposed by reaction with the water before the desired extent of reaction with agarise can be achieved.

After completion of the reaction, the mixture is cooled to 50°C—60°C (if it is at a higher temperature), the alkali is neutralized with an acid or is removed by dialysis or other conventional procedure, and the product is purified by conventional procedures. For example, the solution may be gelled by cooling, frozen and allowed to thaw, then washed and dried, or the product may be precipitated from the reaction solution by mixing with a water-miscible organic liquid which is a non-solvent for the product, such as methanol, ethanol, propanol, acetone, etc. after which the precipitate is filtered, washed with the non-solvent and dried.

These preparations can also be carried out in an organic solvent such as N,N-dimethylformamide, pyridine, or the like, particularly for acylation. Under these conditions, blocking of the aldehyde end group is usually unnecessary, little or no discoloration occurring during the reaction. In addition, acid anhydrides can be employed for acylation instead of acyl halides if desired.

The precise amount of alkenylating or acylating agent employed depends upon the conditions of the reaction and the degree of substitution (D.S.) desired. Usually a large excess above the amount theoretically necessary is used because of the tendency of the agent to react to some extent with water, when present.

The electrophoretic compositions of the invention are prepared generally following the known procedures of forming cross-linked polyacrylamide gel matrices. Thus a mixture of the herein ethylenically unsaturated agarose resin and acrylamide is dissolved in a buffered solution containing a polymerization catalyst such as N,N,N', N'-tetramethylethylene diamine (TEMED) and an initiator such as ammonium persulfate, ammonium sulfate and the requisite aliquot then transferred to a molding cassette provided with a suitable support sheet such as polyester films having an activated surface to promote adhesion of the gel. After polymerization is complete, the gel coating is used in carrying out electrophoretic separations and then processed in the usual manner. The finished gel can be dried directly in an oven with no evidence of shrinking or cracking and with excellent preservation of the electrophoretic pattern.

Generally speaking, the quantity of acrylamide will considerably exceed that of the ethylenically unsaturated agarose resin in the polymerizing mixture. However, the ratio of acrylamide to unsaturated resin is usually lower than in the case of the heretofore simple cross-linkers, for example, N,N'-methylenebisacrylamide or methylenebisacrylates which contain a high percentage of unsaturation relative to their molecular weight. Where the ethylenically unsaturated resin has a high degree of substitution (D.S.), that is, many hydroxyl hydrogens replaced by an unsaturated group, a lesser quantity will be used than where the resin has a lower D.S. value. Whatever the D.S. of the resin may be, a satisfactory polymerizing mixture can normally be formulated by adjusting the ratio of acrylamide to the resin, analogously to controlling pore sizes of conventional polyacrylamide gels by adjusting the acrylamide/bisacrylamide ratio. Usually, a weight ratio of acrylamide to the ethylenically unsaturated agarose derivative of from about 15 to 1 provides electrophoretic gels which can be dehydrated without cracking or shrinking.

Reference is now made to the following examples:

Synthesis of Derivatized Polyols
Example 1
Allylglycidylagarose

Agarose (10 grams) is dissolved in 490 ml of boiling water. The solution is maintained at 80°C and 10 ml of 4.4 M sodium borohydride in 14 M sodium hydroxide is added with constant stirring. After ten minutes, 100 ml of a 10% sodium hydroxide solution is added, followed by the dropwise addition of 25 ml of allylglycidyl ether over a 15-minute period. After one hour, an additional 25 ml of allylglycidyl ether is added as before and reacted for another hour. The reaction mixture is cooled to 60°C and then neutralized by the addition of 4 M acetic acid as indicated by phenolphthalein. The solution is slowly added to 3 volumes of isopropanol, yielding a white precipitate, which is recovered by filtering through a dacron cloth. After two washings in 2 liters of 60% isopropanol, the precipitate is oven dried overnight at 60°C and ground to a fine powder. The derivatives agarose had its initial gelling temperature (42°C) lowered to 16°C.

Example 2
Electrophoresis Using Polyacrylamide/
Allylglycidylagarose Gel

A 30% weight/volume (w/v) solution of acrylamide was prepared in distilled water. Two grams of allylglycidylagarose were dissolved in a final volume of 50 ml of distilled water by heating to boiling and then cooling to room temperature. Fifty ml of a 1.5 M Tris-HCl (pH 8.8), 0.4% sodium dodecylsulfate, 0.1% tetramethylethylenediamine solution was then added to the allylglycidylagarose solution to yield a 2% (w/v) solution of the derivatized agarose. Finally, 10 ml of the 30% acrylamide solution was added to 10 ml of the 2% allylglycidylagarose solution plus 14 mg of ammonium persulfate. This acrylamide/allylglycidylagarose solution was then added to a casting apparatus for formation of the copolymer gel. The casting apparatus consisted of a rectangular glass plate (15.9 cm×14 cm) and a notched glass plate supplied by Aquebogue Machine and Repair Shop (Aquebogue, Long Island, N.Y.). A sheet of polyester film coated with a thin layer of agarose (GelBond® PAG) was placed on top of the rectangular glass plate so that the hydrophilic side was facing outwards. Three plastic spacers, 1.2 mm thick were placed in a U-shape configuration over the edges of the glass-supported plastic and the notched glass plate placed on the spacers and held in place with six spring clamps. Following polymerization and gel formation of the arylamide/allylglycidylagarose solution, a stacking gel was prepared by layering on top of the previous gel 10 ml of a 0.125 M Tris-HCl (pH 6.8) solution containing 3% acrylamide, 2.6% N,N′-methylenebisacrylamide, 0.1% sodium dodecylsulfate, 0.025% tetramethylethylenediamine and ammonium persulfate. Sample slots are formed using a teflon coomb and following polymerization of the stacking gel, the glass cassette is placed into an electrophoretic chamber manufactured by Aquebogue Machine and Repair Shop. Protein samples ranging in molecular weight from 17,000 to 200,000 daltons were prepared at a concentration of 1 mg/1 ml in 0.625 Tris-HCl (pH 6.8) containing 2% sodium dodecylsulfate, 10% glycerol, 5% 2-mercaptoethanol and 0.001% bromophenol blue and 5 µl aliquots were added to the sample wells. The upper and lower reservoirs contained 0.025 M Tris, 0.192 M glycine and 0.1% sodium dodecyl sulfate (pH 8.3). Electrophoresis was carried out at 25 mAmps for 2.5 hours. The polyacrylamide/allylglycidylagarose gel was removed from between the glass plates firmly attached to the GelBond® PAG plastic support. It was placed in a staining solution consisting of 0.05% Coomassie brilliant blue R in 25% isopropanol, 10% acetic acid overnight. The gel was destained for 8 hours in a solution of 45% methanol, 45% acetic acid and then placed in a solution of 7% acetic acid, 5% glycerol for 2 additional hours. After this time, the protein bands were visible and the gel was placed directly in an oven at 65°C until a flexible dried film formed. This dried gel maintained a definitive protein band pattern with no shrinkage or distortion and was kept in a lab notebook as a permanent record.

## Claims

1. An electrophoretic gel composition comprising a copolymer of acrylamide and an agarose having a weight average molecular weight of from about 5000 to about $10^6$ daltons and wherein at least some the hydroxyl hydrogens in said agarose have been substituted by an ethylenically unsaturated group of from 2 to 12 carbon atoms capable of cross-linking with acrylamide in the presence of a catalyst to form a cross-linked polyacrylamide.

2. The composition of claim 1, wherein the ethlyenically unsaturated group is selected from the class consisting of aliphatic hydrocarbon and acyl groups.

3. The composition of claim 1 wherein the copolymer is a copolymer of acrylamide and allylglycidylagarose.

4. The composition of claim 1, wherein the amount of said agarose is 6.25 weight percent based on the total weight of said agarose and acrylamide.

5. Use of the composition according to any one of claims 1 to 4 as a coating on a support sheet having an activated surface to promote adhesion of the gel.

## Patentansprüche

1. Elektrophoretische Gelzusammensetzung, umfassend ein Copolymeres von Acrylamid und einer Agarose mit einem durchschnittlichen Molekulargewicht von etwa 5000 bis etwa $10^6$ Dalton, worin zumindest einige der Hydroxylwasserstoffe in der Agarose durch eine ethylenisch ungesättigte Gruppe mit 2 bis 12 Kohlenstoffatomen, die zur Vernetzung mit Acrylamid in Gegenwart eines Katalysators unter Bildung eines vernetzten Polyacrylamids befähigt ist, substituiert worden sind.

2. Zusammensetzung gemäß Anspruch 1, worin die ethylenisch ungesättigte Gruppe unter aliphatischen Kohlenwasserstoff- und Acylgruppen ausgewählt ist.

3. Zusammensetzung gemäß Anspruch 1, worin das Copolymere ein Copolymeres von Acrylamid und Allylglycidylagarose ist.

4. Zusammensetzung gemäß Anspruch 1, worin die Menge der Agarose 6,25 Gew.-%, bezogen auf das Gesamtgewicht der Agarose und des Acrylamids, beträgt.

5. Verwendung der Zusammensetzung gemäß einem der Ansprüche 1 bis 4 als Überzug auf einer Trägerfolie mit einer aktivierten Oberfläche zur Verbesserung der Adhäsion des Gels.

## Revendications

1. Composition de gel électrophorétique comprenant un copolymère de l'acrylamide et d'un agarose ayant une masse moléculaire moyenne en poids d'environ 5000 à environ $10^6$ daltons et dans lequel au moins une partie des atomes d'hydrogène des groupes hydroxyle de cet agarose ont été substitués par un groupe à insaturation éthylénique en C2 à C12, capable de se réticuler avec l'acrylamide en présence d'un catalyseur pour former un polyacrylamide réticulé.

2. Composition de la revendication 1, dans laquelle le groupe à insaturation éthylénique est choisi dans la classe constituée des hydrocarbures aliphatiques et des groupes acyle.

3. Composition de la revendication 1, dans laquelle le copolymère est un copolymère d'acrylamide et d'allylglycidylagarose.

4. Composition de la revendication 1, dans laquelle la quantité de cet agarose ets de 6,25% en poids par rapport au poids total de cet agarose et de cet acrylamide.

5. Utilisation de la composition suivant l'une quelconque des revendications 1 à 4, comme revêtement sur une feuille de support ayant une surface activée pour favoriser l'adhérence du gel.